# EUROPÄISCHE PATENTANMELDUNG

(11) **EP 4 434 918 A1**
(43) Veröffentlichungstag der Anmeldung: **25.09.2024**
(21) Anmeldenummer: 24156510.0
(22) Anmeldetag: 08.02.2024
(51) Int. Cl.: B65G 17/48, B65G 54/02

(54) **VORRICHTUNG ZUM DREHEN VON AN TRANSPORTBÜGELN HÄNGENDEN TEXTILEN GEGENSTÄNDEN, INSBESONDERE BEKLEIDUNGSSTÜCKEN**

(30) Priorität: 23.03.2023 DE 102023107370; 13.06.2023 DE 102023115378
(71) Anmelder: Herbert Kannegiesser GmbH, 32602 Vlotho (DE)
(72) Erfinder: Göbbels, Peter, 86438 Kissing (DE); Heinz, Engelbert, 32602 Vlotho (DE)
(74) Vertreter: Hoener, Matthias

(57) **Zusammenfassung**

Bekleidungsstücke werden an Transportbügeln (16) hängend durch Wäschereien und auch Konfektionsbetriebe transportiert. Dabei müssen die Transportbügel (16) mit den daran hängenden Bekleidungsstücken gelegentlich gedreht oder gewendet werden, um Datenträger der Bekleidungsstücke und/oder der Transportbügel (16) auslesen zu können oder alle Transportbügel (16) mit daran hängenden Bekleidungsstücken gleich auszurichten. Dazu dient mindestens eine in die jeweilige Förderstrecke integrierte Vorrichtung zum Drehen von an Transportbügeln hängenden Bekleidungsstücken.

Die Erfindung sieht es vor, eine solche Vorrichtung zu schaffen, die über drehbare Mitnehmerhaken (22) verfügt. Das Drehen erfolgt dabei gezielt gesteuert beim Vorbeibewegen des Mitnehmerhakens (22) mit auf dem Transportbügel (16) hängenden Bekleidungsstücken an mindestens einer ortsfesten Steuerungsbahn (35).

## Beschreibung

Die Erfindung betrifft eine Vorrichtung zum Drehen von an Transportbügeln hängenden textilen Gegenständen, insbesondere Bekleidungsstücke, gemäß dem Oberbegriff des Anspruchs 1. Des Weiteren betrifft die Erfindung eine Vorrichtung zum Drehen, vorzugsweise Wenden, von an Transportbügeln hängenden textilen Gegenständen, insbesondere Bekleidungsstücken, gemäß dem Oberbegriff des Anspruchs 8.

Durch Wäschereien und auch Konfektionsbetriebe werden textile Gegenstände, insbesondere Bekleidungsstücke unterschiedlicher Art, an Transportbügeln hängend transportiert. Üblicherweise hängen Transportbügel mit ihren Bügelhaken auf Schienen. Die Schienen folgen dem Verlauf einer Förderstrecke. Entlang der Schienen werden die Transportbügel mit den daran hängenden Bekleidungsstücken entweder durch Schwerkraft an abwärts geneigten Schienen weitertransportiert oder von Mitnehmern an einem in Transportrichtung angetriebenen Förderstrang weiterbewegt.

Es ist bekannt, die textilen Gegenstände und/oder die Transportbügel mit berührungslos auslesbaren Datenträgern, beispielsweise auf elektronischem Wege auslesbaren Chips, aber auch optoelektronisch auslesbaren Barcodes oder QR-Codes, zu versehen. Dann ist es erforderlich, entlang der Förderstrecke wenigstens eine Lesestation vorzusehen. Während die Transportbügel mit den daran hängenden textilen Gegenständem aus Platzgründen üblicherweise quer zur Transportrichtung orientiert durch die Wäscherei oder den Desinfektionsbetrieb transportiert werden, ist es erforderlich, in Lesestationen die Transportbügel mit den daran hängenden Wäschestücken so umzuorientieren, insbesondere zu drehen, dass sie längs zur Transportrichtung verlaufen.

Für bestimmte Behandlungen der textilen Gegenstände in Wäschereien und auch Konfektionsbetrieben ist es erforderlich, dass alle Wäschestücke gleich orientiert sind, indem die Vorderseiten, beispielsweise Schließleisten, der textilen Gegenstände in die gleiche Richtung weisen, insbesondere in Bezug auf die Transportrichtung vorn liegend oder vorauseilend. Beispielsweise müssen die textilen Gegenstände zum Falten, insbesondere automatischem Falten, stets gleich orientiert sein, damit die Vorderseiten, vor allem die Schließseiten, von Bekleidungsstücken nach dem Falten stets oben liegen. Gelegentlich kommt es aber vor, dass einzelne Bekleidungsstücke in der Reihe aufeinanderfolgender an Transportbügeln hängenden Bekleidungsstücken unterschiedlich orientiert sind, indem beispielsweise die Vorderseite in Transportrichtung nicht vorauseilt, sondern die Rückseite. Um die gewünschte gleiche Orientierung beispielsweise vor Faltstationen herzustellen, ist es bekannt, in die Förderstrecke Vorrichtungen zum Drehen, genauer gesagt zum Wenden, falsch orientierter Transportbügel mit daran hängenden Wäschestücken zu integrieren.

Der Erfindung liegt die Aufgabe zugrunde, Vorrichtungen zu schaffen, die auf einfache Weise ein zuverlässiges Drehen und/oder Wenden von an Transportbügeln hängenden textilen Gegenständen, insbesondere Bekleidungsstücken, vornehmen.

Eine Vorrichtung zur Lösung dieser Aufgabe weist die Merkmale des Anspruchs 1 auf. Bei dieser Vorrichtung ist es vorgesehen, wenigstens einen Mitnehmer, vorzugsweise mehrere mit Abstand aufeinanderfolgende Mitnehmerhaken, drehbar an einem Förderstrang zu befestigen und den oder jeden Mitnehmerhaken mit einem zum Drehen dienenden Drehorgan zu versehen, das mit mindestens einer ortsfesten Führung, Führungsstrang oder Führungsbahn und/oder wenigstens einer daran gebildeten Steuerungsbahn korrespondiert. Vorzugsweise stützt sich der oder jeder Mitnehmerhaken mit mindestens einer Kontaktstelle und/oder einem Tastmittel seines Drehorgans am jeweiligen ortsfesten Führungsstrang, insbesondere wenigstens einer Steuerungsbahn desselben, ab.

Durch Abtasten des Verlaufs der oder der jeweiligen Steuerungsbahn an oder entlang dem oder jedem in Transportrichtung verlaufenden Führungsstrang oder der oder jeder Führung erfolgt mindestens eine Drehung des betreffenden Mitnehmerhakens mit dem daran hängenden Transportbügel samt Bekleidungsstück. Vorzugsweise erfolgen mehrere Drehungen an unterschiedlichen aufeinanderfolgenden Stellen der Führung oder Führungsbahn. Der Umfang und die Geschwindigkeit der Drehung werden vom Verlauf der Steuerungsbahn während des Weitertransports des Mitnehmerhakens mit dem Transportbügel und dem daran hängenden Bekleidungsstück in Transportrichtung gesteuert.

Bevorzugt ist es vorgesehen, dass der jeweilige Mitnehmerhaken um eine Drehachse frei drehbar in einem dem Förderstrang zugeordneten Lagergehäuse angeordnet ist. Das Lagergehäuse kann am Förderstrang befestigt sein. Die Drehachse kann einen vertikalen, senkrechten und/oder lotrechten Verlauf aufweisen. Durch das Verdrehen des jeweiligen Mitnehmerhakens sind die Transportbügel mit dem daran hängenden Bekleidungsstück um die Drehachse des Mitnehmerhakens verdrehbar.

Bevorzugt verfügt das Drehorgan über einen scheibenartigen Körper. Der scheibenartige Körper ist vorzugsweise unverdrehbar mit dem Mitnehmerhaken verbunden oder als Teil desselben ausgebildet. Dabei kann es sich im einfachsten Fall um einen konzentrisch um die Drehachse herum angeordneten Ring oder Rahmen handeln. Bevorzugt erstreckt sich der scheibenartige Körper nur teilweise um die Drehachse herum, und zwar nur so weit, wie der gewünschte Drehwinkel ist. Der Außenumfang des scheibenartigen Körpers korrespondiert direkt oder indirekt mit der mindestens einen Steuerungsbahn.

Insbesondere ist es vorgesehen, dass durch die Gestalt und/oder Gestaltung der mindestens einen Steuerungsbahn, die vorzugsweise der Führung oder dem Führungsstrang zugeordnet oder Teil desselben ist, die Geschwindigkeit, der Umfang und/oder der Drehwinkel des Mitnehmerhakens den Anforderungen entsprechend festgelegt oder vorgegeben wird. Bevorzugt ist es vorgesehen, dass sich der Drehbereich des Mitnehmerhakens durch die mindestens eine entsprechend ausgebildete Steuerungsbahn über mindestens 90° erstreckt, vorzugsweise um 90°, um den am Mitnehmerhaken hängenden Transportbügel mit dem Bekleidungsstück in eine Legeposition zu bringen oder um 180°, um den Transportbügel mit dem Bekleidungsstück zu wenden. Durch eine Drehung um 90° kann der Transportbügel mit dem daran hängenden Wäschestück von einer Ausrichtung quer zur Transportrichtung in eine solche, die in Transportrichtung verläuft, geändert werden. Vorzugsweise wird nach dem Lesevorgang der Mitnehmerhaken wieder um 90° zurückgedreht oder alternativ um 90° weitergedreht. Letzteres würde zu einem vollständigen Wenden des Transportbügels mit dem daran hängenden Bekleidungsstück führen.

Gemäß einer vorteilhaften Ausgestaltungsmöglichkeit der Vorrichtung ist es vorgesehen, dem scheibenartigen Körper, der auch nur als Teilscheibe ausgebildet sein kann, mehrere über den Drehbereich des Mitnehmerhakens verteilte Tastmittel und/oder Kontaktstellen zuzuordnen. Bevorzugt tasten verschiedene und/oder abwechselnd andere Tastmittel und/oder Kontaktstellen den wenigstens einen Führungsstrang, insbesondere seine Steuerungsbahn oder mehrere, vorzugsweise zwei übereinanderliegende, Steuerungsbahnen und/oder Gleitprofile desselben oder an demselben, ab. Beim Entlangbewegen des jeweiligen Mitnehmerhakens in Transportrichtung entlang des Führungsstrangs und/oder seiner wenigstens einen Steuerungsbahn, insbesondere einem Gleitprofil desselben, wird dann durch den scheibenartigen Körper der Mitnehmerhaken mit dem Transportbügel und dem Bekleidungsstück in dem Maße verdreht, wie es von der Gestaltung, dem Profil und/oder der Länge der oder der jeweiligen Steuerungsbahn vorgegeben wird.

Bevorzugt sind die Tastmittel und/oder Kontaktstellen außen am scheibenartigen oder teilscheibenartigen Körper als frei drehbare Stützkörper und/oder beispielsweise gleit- oder wälzgelagerte Rollen ausgebildet, deren äußere, zylindrische Mantelflächen sich beim Weitertransport des jeweiligen Mitnehmerhakens an der mindestens einen Steuerungsbahn abwälzen und die mindestens eine Steuerungsbahn dabei abtasten.

Besonders vorteilhaft ist es, wenn der oder jeder Mitnehmerhaken um seine Drehachse drehend vorgespannt ist. Diese Vorspannung ist insbesondere derart gerichtet, dass mindestens eine Kontaktstelle und/oder mindestens ein Tastmittel außen am scheibenartigen Körper gegen die jeweilige diesem zugeordnete Führungsbahn und/oder die mindestens eine Steuerungsbahn drückt. Dadurch wird sichergestellt, dass beim Entlangbewegen des Mitnehmerhakens an der oder jeder Steuerungsbahn das wenigstens eine sich momentan damit in Kontakt befindende Tastmittel und/oder der Stützkörper des scheibenartigen Körpers des Drehorgans dem kurvenförmigen Verlauf der jeweiligen Steuerungsbahn zuverlässig und genau folgen kann.

Das mindestens eine federnd gegen die Steuerungsbahn und/oder das Gleitprofil derselben gedrückte Tastmittel und/oder der Stützkörper können den in Transportrichtung weitertransportierten Transportbügel samt Bekleidungsstück oder sonstigem textilen Gegenstand gezielt verdrehen. Das Drehen erfolgt mit einer gewünschten Geschwindigkeit, die sicherstellt, dass das mit dem Transportbügel am Mitnehmerhaken hängende Bekleidungsstück in allen Phasen der Drehung ruhig am Mitnehmerhaken hängen bleibt und keine unkontrollierten Schwingungen ausführt, die im Extremfall zum Herunterfallen des Bekleidungsstücks vom Transportbügel führen könnten.

Gemäß einer bevorzugten Ausgestaltung der Vorrichtung sind die Führungen, Führungsstränge und/oder die Steuerungsbahnen parallel verlaufend neben einem Abschnitt des Förderstrangs, der die Mitnehmerhaken in Transportrichtung antreibt, ortsfest angeordnet. Die wenigstens eine Führung, der mindestens eine Führungsstrang und vorzugsweise auch die mindestens eine Steuerungsbahn folgen dem Verlauf des Förderstrangs in Transportrichtung, wodurch die Steuerungsbahn eine Länge aufweisen kann, die ausreicht, um den jeweiligen Mitnehmerhaken über den gewünschten Winkelbereich zu verdrehen und um gegebenenfalls den gleichen Winkelbereich auch wieder zurückzudrehen, beispielsweise nachdem berührungslos der Datenträger des textilen Gegenstands und/oder des diesen tragenden Transportbügels ausgelesen worden sind.

Eine weitere Vorrichtung zur Lösung der eingangs genannten Aufgabe weist die Merkmale des Anspruchs 8 auf. Bei dieser Vorrichtung ist es vorgesehen, dass der Mitnehmerhaken drehend an einem Schlitten befestigt ist und bei einer Bewegung des Mitnehmerhakens von einer Übergabe- in eine Abgabestellung der mit dem daran hängenden Transportbügel samt dem daran hängenden textilen Gegenstand durch mindestens ein Drehorgan und/oder eine Steuerungsbahn eine gezielt geführte Drehung erfährt. Außerdem ist bei der umgekehrten Bewegung des vorzugsweise leeren Mitnehmerhakens von der Abgabestellung zurück in die Übergabestellung der Mitnehmerhaken zurückdrehbar. Auf diese Weise kann ein exaktes Verdrehen des Mitnehmerhakens in entgegengesetzte Richtung erfolgen und es sind durch Abtasten der Steuerungsbahn der Drehwinkel und die Drehgeschwindigkeit den Bedürfnissen entsprechend vorgebbar. Es sind durch die Steuerungsbahn beliebige Drehwinkel realisierbar. Vorzugsweise liegen die möglichen Drehwinkel zwischen 90° und 180°. Zum Wenden eines textilen Gegenstands ist ein Drehwinkel von 180° vorgesehen.

Bevorzugt ist der Schlitten mit dem daran befestigten Mitnehmerhaken an einer ortsfesten, vorzugsweise geradlinigen Führungsschiene zwischen der Übergabestellung und der Abgabestellung geführt verfahrbar, vorzugsweise translatorisch hin- und herfahrbar. Anhand dieses Verfahrwegs erfolgt durch Abtasten eines entsprechenden Verlaufs der Steuerungskurve die Verdrehung des Mitnehmerhakens. Diese Bewegung erfolgt in Transportrichtung mit dem daran hängenden Transportbügel, auf dem ein textiler Gegenstand aufgebügelt ist und zurück gegen die Transportrichtung im leeren Zustand.

Gemäß einer Weiterbildung der Vorrichtung ist es vorgesehen, dass der Mitnehmerhaken in einem am Schlitten fest angeordneten Lagergehäuse um eine vorzugsweise vertikale Drehachse frei drehbar gelagert ist. Dadurch wird der Mitnehmerhaken vom Schlitten in Transportrichtung weiterbewegt und bei dieser Bewegung zum Drehen, insbesondere Wenden des textilen Gegenstands, zusätzlich um seine vertikale Drehachse gedreht. Hervorgerufen wird diese Drehung durch mindestens eine Steuerungsbahn einer Führung.

Der Antrieb des Schlittens erfolgt in einer vorteilhaften Ausgestaltungsmöglichkeit der Vorrichtung von einem Linearantrieb. Beim Linearantrieb kann es sich um einen Pneumatikzylinder, einen Shuttlezylinder, einen Spindeltrieb, einen Zahnstangentrieb oder auch einen Riementrieb handeln. Sämtlicher dieser genannten Triebe ermöglichen einen Weitertransport des Schlittens auf einer geraden und/oder translatorischen Bahn längs der Transportrichtung.

Die Vorrichtung kann dahingehend weitergebildet sein, dass die Steuerungsbahn von einer Nut in der vorzugsweise als Führungsplatte ausgebildeten Führung gebildet ist. Mit der Nut kann das zum Drehen und/oder Wenden des Mitnehmerhakens dienende Drehorgan korrespondieren. Das kann derart sein, dass ein Stützkörper oder Tastvorsprung des Drehorgans des Mitnehmerhakens die Nut und/oder Steuerungsbahn beim translatorischen Weitertransport des Mitnehmerhakens in Transportrichtung abtastet und dadurch die Drehung, insbesondere das Wenden, des Mitnehmerhakens gezielt gesteuert wird.

Bevorzugt ist es vorgesehen, dass die Steuerungsbahn, insbesondere die die so bildende Nut, zwei Nutabschnitte aufweist, die vorzugsweise beide als 90°-Bögen ausgebildet und spiegelbildlich zueinander angeordnet sind. Die die Nutabschnitte bildenden 90°-Bögen müssen nicht zwingend einen identischen Verlauf aufweisen. Es sind auch unterschiedliche Verläufe denkbar. Entscheidend ist, dass sich beide Nutabschnitte über einen Winkelbereich von 90° erstrecken, so dass der Mitnehmerhaken samt Transportbügel und Bekleidungsstück um insgesamt 180° verdrehbar ist und somit das Bekleidungsstück gewendet wird.

Vorzugsweise ist es vorgesehen, dass sich die beiden spiegelbildlich angeordneten Nutabschnitte an ihren zueinander gerichteten höchsten Stellen treffen. Insbesondere gehen die beiden spiegelbildlich zueinander angeordneten Nutabschnitte an einer höchsten Stelle der Nut ineinander über. Alternativ oder zusätzlich können die Nutabschnitte an ihren zueinander gerichteten Enden auch miteinander verbunden sein. Die Nutabschnitte treffen sich an ihren zueinander gerichteten Enden nicht nur, sie gehen hier auch ineinander über und sind so nahtlos miteinander verbunden.

Durch die Steuerungsbahn lässt sich die Drehbewegung der Mitnehmerhaken durch die Nut aus den zwei Nutabschnitten gezielt steuern. Durch den Verlauf, insbesondere die Steigerung, der Nut wird die Geschwindigkeit, womit der Mitnehmerhaken insbesondere mit dem daran hängenden Transportbügel und textilen Gegenstand momentan verdreht wird, individuell vorgegeben.

Eine weitere vorteilhafte Weiterbildungsmöglichkeit der Vorrichtung sieht es vor, dass der Mitnehmerhaken vorzugsweise an seinem freien oberen Ende einen Dreharm zum Verdrehen des Mitnehmerhakens um seine Drehachse aufweist. Der Dreharm ist unverdrehbar mit dem Mitnehmerhaken verbunden. Ein freies Ende des Dreharms korrespondiert mit der Steuerungsbahn, insbesondere der Nut in der Führungsplatte, wodurch beim Weitertransport des Mitnehmerhakens in Transportrichtung der Dreharm verschwenkt wird und dabei vom Dreharm eine Drehbewegung auf den Mitnehmerhaken ausgeübt und/oder gesteuert wird.

Vorzugsweise weist ein freies Ende des Dreharms einen insbesondere hochstehenden Tastvorsprung auf. Dieser Tastvorsprung ist zum Eingriff in die Steuerungsbahn, vorzugsweise die Nut derselben, ausgebildet. Dadurch kann sich der Tastvorsprung an oder in der Steuerungsbahn, vorzugsweise seiner Nut, abstützen und beim Weiterbewegen des Mitnehmerhakens längs der Transportrichtung an und/oder in der Nut entlang gleiten.

Der Mitnehmerhaken und dadurch der daran hängende Transportbügel werden in Abhängigkeit vom Verlauf der Nut durch den in der Nut und/oder Steuerungsbahn geführten Dreharm verdreht, vorzugsweise gewendet, und dabei der Mitnehmerhaken in eine Drehbewegung um seine Drehachse versetzt.

Beim Tastvorsprung kann es sich um einen in die Steuerungsbahn, insbesondere die Nut derselben, eingreifenden Stift oder auch ein Lager, beispielsweise ein Wälz- oder Gleitlager, handeln. Ein solcher Tastvorsprung kann leichtgängig, aber ohne zu klemmen, vorzugsweise spielfrei oder nahezu spielfrei, in der Nut entlanglaufen und dabei diese, insbesondere ihren Verlauf, abtasten oder abfahren.

Bevorzugte Ausführungsbeispiel von Vorrichtungen gemäß der Erfindung werden nachfolgend anhand der Zeichnung näher erläutert. In dieser zeigen:
- Fig. 1: eine im oberen Bereich geschnittene Seitenansicht einer ersten Vorrichtung,
- Fig. 2: einen Querschnitt durch die Vorrichtung der Fig. 1,
- Fig. 3: einen Förderer der Vorrichtung der Fig. 1 und 2 in einer Ansicht von unten,
- Fig. 4: eine perspektivische Darstellung des Förderers der Fig. 3,
- Fig. 5: eine Einzelheit V aus der Fig. 4.,
- Fig. 6: eine perspektivische Ansicht einer zweiten Vorrichtung bei geöffnetem Gehäuse,
- Fig. 7: eine Seitenansicht der Vorrichtung der Fig. 6,
- Fig. 8: einen Schnitt VIII-VIII durch die in der Fig. 7 dargestellte zweite Vorrichtung,
- Fig. 9: eine Draufsicht auf die Vorrichtung der Fig. 6 bis 8, und
- Fig. 10: einen Schnitt X-X durch die in der Fig. 9 dargestellte zweite Vorrichtung.

Die in den Figuren gezeigten Vorrichtungen sind in einer Förderstrecke angeordnet. Es können beide Vorrichtungen an verschiedenen Stellen einer gleichen Förderstrecke angeordnet sein, aber auch jeweils eine Vorrichtung in einer eigenen Förderstrecke. Die jeweilige Vorrichtung ist derart in eine einzige Förderstrecke oder unterschiedliche Förderstrecken integriert, dass sie einen kurzen Teilabschnitt derselben bilden.

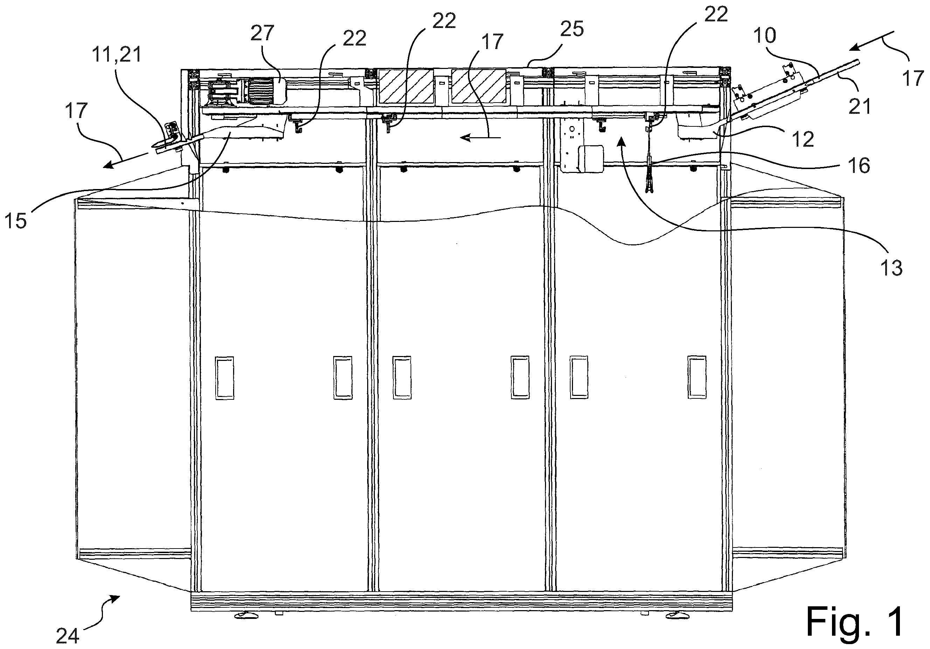

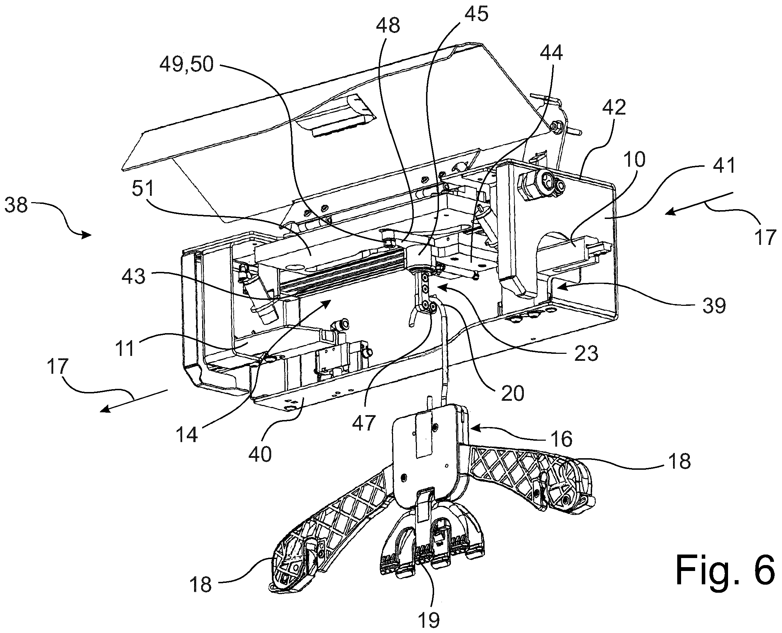

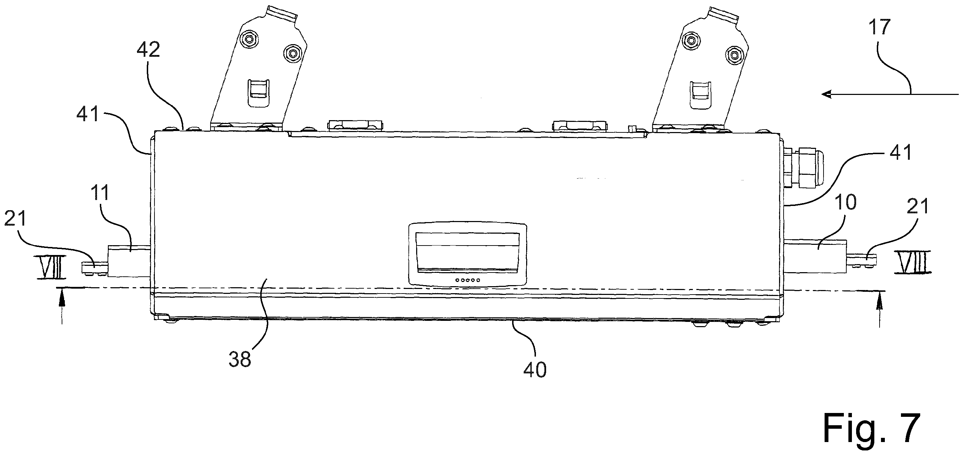

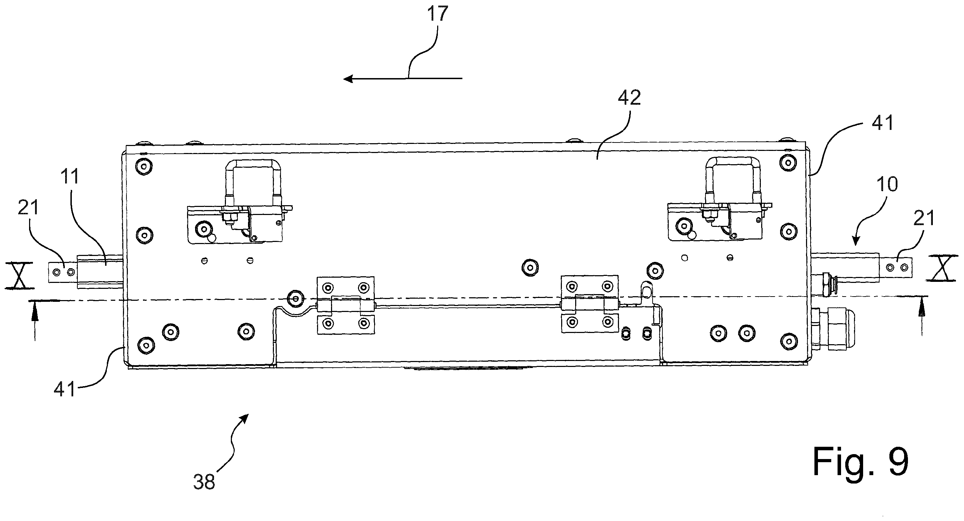

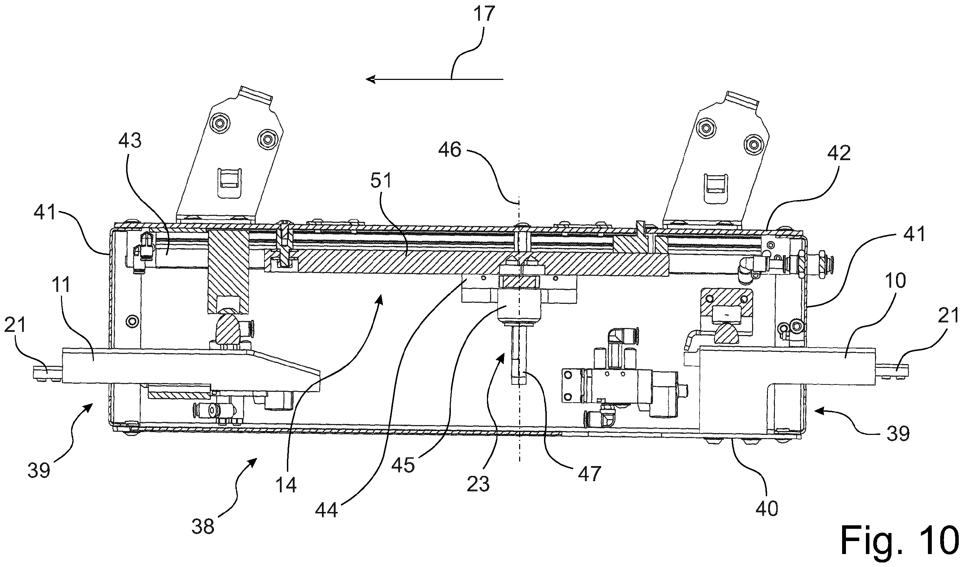

In den Figuren, insbesondere in den Fig. 1 und 6, sind nur gegenüberliegende Endbereiche, nämlich ein Zulaufende 10 und ein Auslaufende 11 der im Übrigen nicht gezeigten Förderstrecke oder Förderstrecken gezeigt. Ans Zulaufende 10 der Förderstrecke schließt ein Anfang 12 eines Förderers 13 der in den Fig. 1 bis 5 gezeigten Vorrichtung bzw. ein Förderer 14 in den Fig. 6 bis 10 gezeigten Vorrichtung an. An einem Ende 15 des jeweiligen Förderers 13 bzw. 14 schließt das gegenüberliegende Auslaufende 11 der nicht gezeigten Förderstrecke an.

Entlang der nicht vollständig gezeigten Förderstrecke und durch die in den Figuren gezeigten Vorrichtungen werden an Transportbügeln 16 hängende nicht dargestellte textile Gegenstände zu unterschiedlichen Arbeitsstationen, Bearbeitungsstationen und/ oder Behandlungsstationen von Wäschereien oder Konfektionsbetrieben transportiert. Bei den textilen Gegenständen handelt es sich vorzugsweise um sogenannte Formteile, Bekleidungsstücke, Berufsbekleidungsstücke oder dergleichen.

Die textilen Gegenstände werden über das Zulaufende 10 des Förderers in die jeweilige Vorrichtung transportiert und nach dem Durchlaufen der Vorrichtung wieder an das gegenüberliegende Auslaufende 11 der Förderstrecke übergeben. Auf diese Weise durchlaufen die textilen Gegenstände die jeweilige Vorrichtung in Transportrichtung 17.

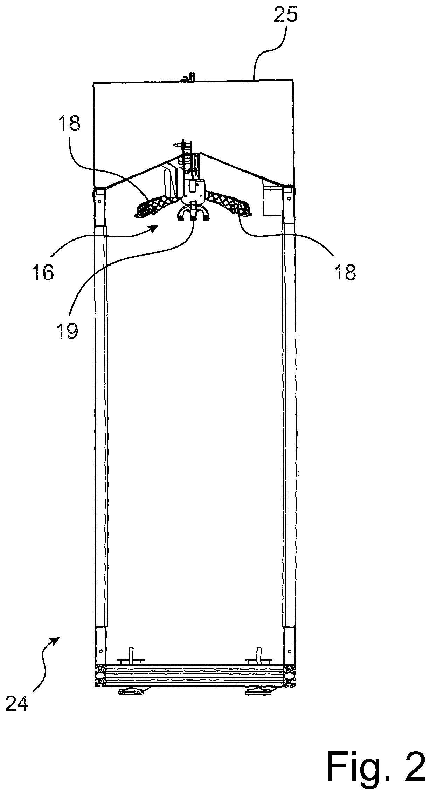

In einigen Figuren, beispielsweise den Fig. 2 und 6, sind Transportbügel 16 mit ausgeklappten Bügelarmen 18 dargestellt. Jeweils ein Bekleidungsstück wird zur Behandlung in der Wäscherei bzw. im Konfektionsbetrieb bei in der Figur gezeigten ausgeklappten Bügelarmen 18 auf einen Transportbügel 16 aufgehängt und so in Transportrichtung 17 durch die Vorrichtungen und auch entlang der abgesehen vom Zulaufende 10 und Auslaufende 11 nicht gezeigten Förderstrecke transportiert. Die in den Figuren gezeigten Transportbügel 16 verfügen auch noch über eine Klammer 19, die geöffnet und geschlossen werden kann. Diese Klammer 19 dient dazu, textile Gegenstände an den jeweiligen Transportbügel 16 anzuhängen, die nicht über die Bügelarme 18 gehängt werden können. Beispielsweise können Hosen an bzw. unter die Klammern 19 gehängt werden. Der Transportbügel 16 verfügt außerdem über einen Bügelhaken 20. Mit diesem Bügelhaken 20 ist jeder Transportbügel 16 samt daran hängendem textilen Gegenstand auf eine Schiene 21 der Förderstrecke aufhängbar. Bei antriebslosen oder mit einem Antrieb erfolgenden Weiterbewegungen der Transportbügel 16 in Transportrichtung 17 rutschen die Bügelhaken 20 der Transportbügel 16 auf der Schiene 21 entlang.

In der Vorrichtung hängt jeder Transportbügel 16 mit seinem Bügelhaken 20 an einem Mitnehmerhaken 22 bzw. 23 des jeweiligen Förderers 13 bzw. 14.

Die in den Fig. 1 bis 5 gezeigte erste Vorrichtung ist ausgebildet, um nach und nach jeweils einen Transportbügel 16 mit dem daran hängenden Transportbügel samt textilem Gegenstand mehrere Male zu drehen, und zwar vorzugsweise zweimal jeweils um 90°. Diese Drehungen erfolgen in unterschiedliche Richtungen, und zwar einmal um 90° in eine Richtung und das andere Mal ebenfalls um 90° in entgegengesetzte Richtung.

In Transportrichtung 17 gesehen gelangen Transportbügel 16 mit daran hängenden textilen Gegenständen nach und nach in den Bereich des Anfangs 12 des Förderers 13 der Vorrichtung, und zwar bei einer quer zur Transportrichtung 17 verlaufenden Orientierung (Fig. 1). Durch anschließendes Drehen um 90° wird der jeweilige Transportbügel 16 mit dem darunter hängenden textilen Gegenstand so umorientiert, dass er längs und/oder parallel zur Transportrichtung 17 verläuft. Anschließend wird der Transportbügel 16 mit dem daran hängenden textilen Gegenstand wieder um 90° gedreht, vorzugsweise in entgegengesetzte Drehrichtung zurückgedreht, so dass der jeweilige Transportbügel 16 wieder seine quer zur Transportrichtung 17 verlaufende ursprüngliche Orientierung zurückerhält. Danach wird der jeweilige leere Mitnehmerhaken 22 entlang einem Rücktrum der Förderkette 26 gegen die Transportrichtung 17 wieder zum Anfang 12 transportiert, um dort einen folgenden Transportbügel 16 mit einem textilen Gegenstand zu übernehmen.

Auf die vorstehend beschriebene Abfolge der Drehungen der Mitnehmerhaken 22 und die genannten Drehwinkel soll die Erfindung aber nicht eingeschränkt sein. Vielmehr sind hiervon abweichende Drehwinkel und Drehphasen möglich.

Bei der hier gezeigten Vorrichtung dient das temporäre Umorientieren des Transportbügels 16 mit dem daran hängenden textilen Gegenstand dazu, den jeweiligen Transportbügel 16 mit dem daran hängenden textilen Gegenstand bei längs zur Transportrichtung 17 verlaufender Orientierung einer nicht gezeigten Leseeinrichtung zu präsentieren. Die Leseeinrichtung ist der Vorrichtung zugeordnet. Sie kann Bestandteil der Vorrichtung, aber auch eigenständig sein. Die Leseeinrichtung liest auf elektronischem oder optoelektronischem Wege berührungslos einen Datenträger, wie zum Beispiel einen elektronischen Chip, Barcode oder QR-Code sowohl auf dem Transportbügel 16 als auch an dem daran hängenden textilen Gegenstand. Es ist aber auch denkbar, dass nur der jeweilige Transportbügel 16 oder nur der daran hängende textile Gegenstand einen Datenträger aufweist, so dass dann die Leseeinrichtung dazu ausgebildet ist, nur den Datenträger des Transportbügels 16 oder des textilen Gegenstands berührungslos zu lesen.

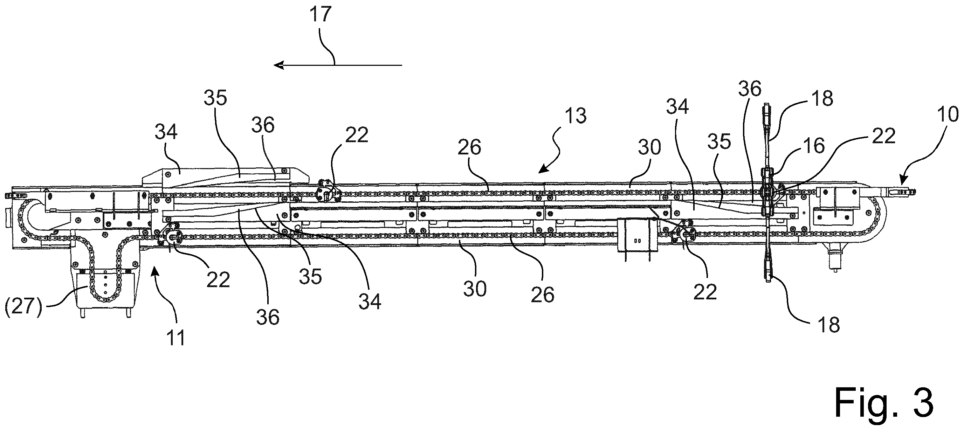

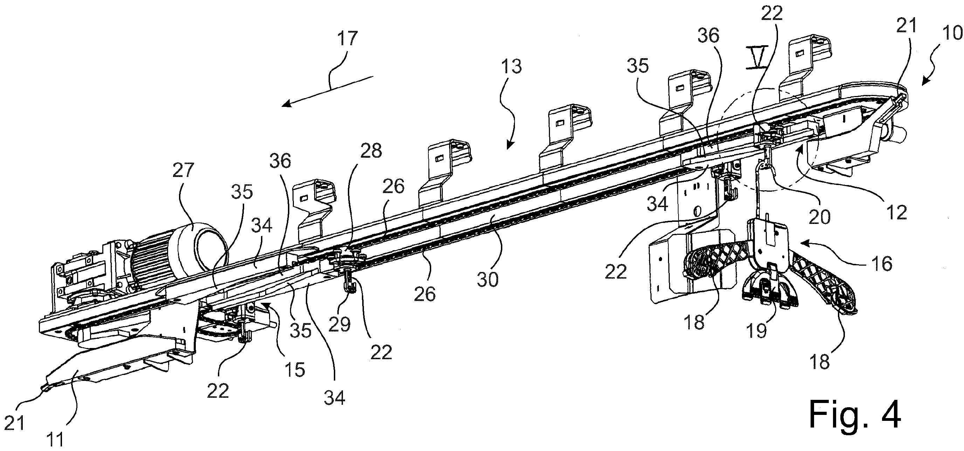

In einem an gegenüberliegenden Stirnseiten mindestens größtenteils offenen Gehäuse 24 der Vorrichtung befindet sich der Förderer unter einer Decke 25 des Gehäuses 24 oder mit geringem Abstand unter der Decke 25. In den Fig. 3 und 4 ist dieser Förderer 13 separat dargestellt. Beim Förderer handelt es sich um einen Stetigförderer mit einem umlaufend antreibbaren endlosen Förderstrang, der im gezeigten Ausführungsbeispiel als eine Förderkette 26, beispielsweise in Gestalt einer Rollenkette, ausgebildet ist. Durch einen Antrieb 27, beispielsweise einen Elektromotor mit einem Getriebe, ist die Förderkette 26 umlaufend antreibbar, und zwar derart, dass wenigstens ein Trum, das den Transportbügel 16 mit daran hängenden Bekleidungsstücken weitertransportiert, in Transportrichtung 17 verläuft und ein gegenüberliegendes Trum als Rücktrum in Gegenrichtung.

An der Förderkette 26 sind mit vorzugsweise gleichen Abständen mehrere vorzugsweise gleiche Mitnehmerhaken 22 angeordnet. Untere Enden der Mitnehmerhaken 22 weisen jeweils einen vorzugsweise bügelartigen Aufhänger 29 auf. Der Transportbügel 16 mit dem daran hängenden textilen Gegenstand kann mit seinem Bügelhaken 20 auf den Aufhängern 29 jedes Mitnehmerhakens 22 gehängt werden.

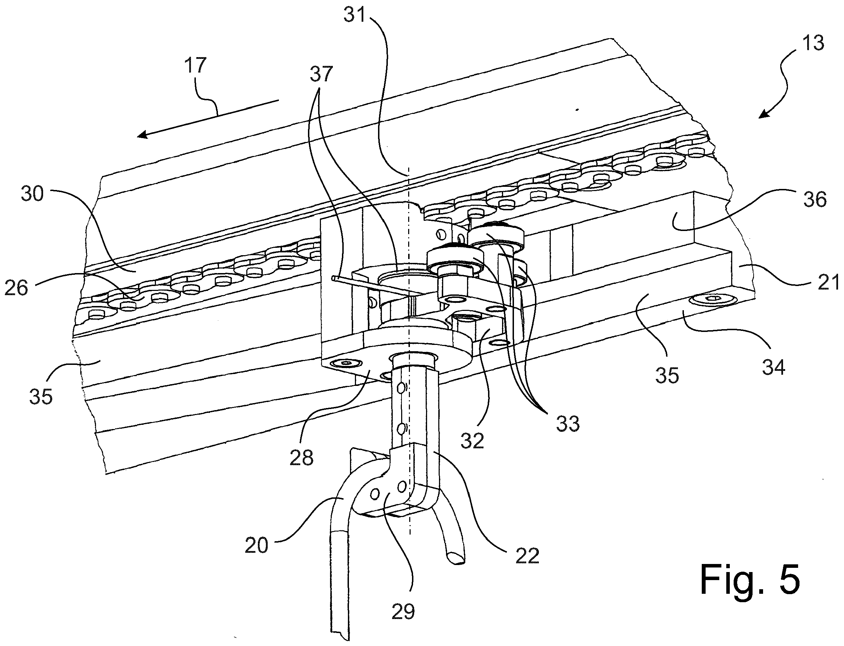

Die Förderkette 26 läuft zumindest im Bereich ihrer beiden parallelen Trume in einem ortsfesten Führungsstrang 30. Dieser trägt mindestens die geradlinigen Trume der Förderkette 26 und führt diese auf einer geradlinigen Bahn entlang der Transportrichtung 17. Die Mitnehmerhaken 22 sind so mit der Förderkette 26 verbunden, dass sie sich unterhalb der Förderkette 26 und auch unterhalb des Führungsstrangs 30 befinden (Fig. 5).

Die Abstände aufeinanderfolgender Mitnehmerhaken 22 des Förderers 13 sind so gewählt, dass sie größer sind als die Breite des längs zur Transportrichtung 17 ausgerichteten Transportbügels 16 mit einem daran hängenden textilen Gegenstand. Vorzugsweise weisen die Mitnehmerhaken 22 einen Abstand auf, der dem 1,2-fachen bis 2-fachen der Breite des jeweiligen ausgeklappten Transportbügels 16 entspricht.

Jeder der gleich ausgebildeten Mitnehmerhaken 22 ist in einem Lagergehäuse 28 um eine vertikale Drehachse 31 drehbar, vorzugsweise frei drehbar, gelagert. Über dieses Lagergehäuse 28 ist der jeweilige Mitnehmerhaken 22 mit der Förderkette 26 verbunden. Diese Verbindung erfolgt derart, dass das Lagergehäuse 28 unverdrehbar mit der Förderkette 26 verbunden ist, sich also nicht auch um die Drehachse 31 drehen kann.

Mit dem jeweiligen Mitnehmerhaken 22 ist ein Drehorgan 32 fest verbunden. Das Drehorgan 32 wirkt nach Art eines Hebels auf den Mitnehmerhaken 22 ein. Dies geschieht derart, dass vom Drehorgan 32 der Mitnehmerhaken 22 um seine Drehachse 31 verdrehbar ist. Das Drehorgan 32 ist bevorzugt scheibenartig ausgebildet. Bei der in den Fig. 1 bis 5 gezeigten Vorrichtung, mit der der jeweilige Transportbügel 16 mit dem daran hängenden textilen Gegenstand mit 90°-Schritten phasenweise verdreht werden soll, also eine Viertelkreisdrehung auszuführen hat, ist das Drehorgan 32, insbesondere ihr scheibenartiger Körper, auch nur viertelkreisig ausgebildet. Es handelt sich dann beim Drehorgan 32 um einen kreissegmentartigen oder viertelkreisförmigen Körper. Dieser Körper kann auch als eine viertelkreisförmige Drehscheibe bezeichnet werden oder eine solche bilden.

Das kreissegmentartige Drehorgan 32, insbesondere der viertelkreisige scheibenartige Körper und/oder die viertelkreisige Drehscheibe, verfügt über eine Außenkontur, die prinzipiell konzentrisch um die Drehachse 31 herumgeführt ist und gegenüber dem Lagergehäuse 28 über ihre gesamte Außenkontur nach außen vorsteht. Bei der hier gezeigten Vorrichtung ist das Drehorgan 32 am äußeren Rand mit mehreren Tastmitteln 33 versehen. Diese können auch als Stützkörper, Stützrollen, Stützlager und/oder Kontaktstellen bezeichnet werden. Im gezeigten Ausführungsbeispiel sind die vorzugsweise gleich ausgebildeten Tastmittel 33 als Wälz- oder Gleitlager aufweisende Stützlager ausgebildet. Alle Stützlager zur Bildung der Tastmittel 33 sind um beabstandete parallele vertikale Drehachsen frei drehbar, die parallel zur Drehachse 31 des jeweiligen Mitnehmerhakens 22 im Lagergehäuse 28 verlaufen, vorzugsweise Mittelpunkte der Drehachsen der Tastmittel 33, insbesondere Stützlager, den Mittelpunkt der Drehachse 31 mit Abstand vorzugsweise nahezu konzentrisch umgeben.

Im gezeigten Ausführungsbeispiel sind dem Drehorgan 32 insgesamt vier gleiche Tastmittel 33 zugeordnet, und zwar in zwei Gruppen von jeweils zwei Tastmitteln 33. Jede Gruppe von zwei Tastmitteln 33 befindet sich an gegenüberliegenden Endbereichen des viertelkreisigen Außenrands des Drehorgans 32. Die beiden vorzugsweise als Stützlager ausgebildeten Tastmittel 33 jedes der beiden Paare sind in Axialrichtung ihrer parallel zur Drehachse 31 verlaufenden Drehachsen versetzt. Jedes Paar Tastmittel 33 weist ein in einer höheren Ebene und ein in einer darunterliegenden Ebene sich befindendes Tastmittel 33, insbesondere Stützlager, auf. Diese Höhenunterschiede sind derart, dass die untere Ebene des oberen Tastmittels 33 sich mit vorzugsweise geringfügigem Abstand über der oberen Ebene des niedrigeren Tastmittels 33 befindet. Alternativ ist es denkbar, dass jedes Drehorgan 32 weniger oder auch mehr als vier Tastmittel 33 und/oder Stützlager oder Stützrollen aufweist und/oder alle Tastmittel 33 in einer gemeinsamen horizontalen Ebene liegen.

Den Tastmitteln 33 der Drehorgane 32 der Mitnehmerhaken 22 sind feststehende Leisten 34 oder alternativ Platten, die gegebenenfalls aus in Transportrichtung 17 aufeinanderfolgenden Abschnitten gebildet sein können zugeordnet. Im vor allem in den Fig. 3 und 4 dargestellten Ausführungsbeispiel der Vorrichtung sind dem in Transportrichtung 17 verlaufenden Trum des Förderers 13, vorzugsweise seiner Förderkette 26, zwei Leisten 34 zugeordnet, und zwar am Anfang 12 und am Ende 15. Diese Anordnung ist derart gespiegelt getroffen, dass im Bereich jeder Leiste 34 der betreffende Mitnehmerhaken 22 mit gleicher Drehrichtung um 90° gedreht wird. Gemäß den Fig. 3 und 4 ist eine weitere Leiste 34 dem Rücktrum für leere Mitnehmerhaken 22 zugeordnet. Diese dient zum Zurückdrehen des Mitnehmerhakens 22 in seine Ausgangsorientierung.

Die zu den Tastmitteln 33, nämlich die diese bildenden Drehlager, weisenden Seiten der Leisten 34 sind so ausgebildet, dass sie Steuerungsbahnen 35 und 36 bilden. An diesen Steuerungsbahnen 35 und 36 können sich bestimmte und/oder wechselnde Tastmittel 33 des Drehorgans 32 des jeweiligen Mitnehmerhakens 22 beim Weiterbewegen derselben in Transportrichtung 17 entlangbewegen, nämlich abwälzen und/oder entlanggleiten. Die Steuerungsbahnen 35 und 36 geben ein Führungs- oder Gleitprofil für die Tastmittel 33 an den Drehorganen 32 der Mitnehmerhaken 22 vor. In Abhängigkeit von der Ausbildung, insbesondere dem Profil, der Steuerungsbahnen 35 und 36 werden der Drehwinkel und die Drehgeschwindigkeit der Mitnehmerhaken 32 vorgegeben.

Die Leisten 34 oder Schienen zur Bildung der Steuerungsbahnen 35 und 36 sind bevorzugt unter dem Führungsstrang 30 der Förderkette 26 fest angeordnet (Fig. 5). Es ist aber auch denkbar, die Steuerungsbahnen 35 und 36 an anderen Stellen der Vorrichtung ortsfest anzuordnen.

Die mehreren Leisten 34 verfügen bevorzugt jeweils über Steuerungsbahnen 35 und 36 mit unterschiedlichen Steuerungsprofilen oder Abwälzbahnen für die Tastmittel 33. Die obere Steuerungsbahn 36 verläuft parallel zur unteren Steuerungsbahn 35 (Fig. 4 und 5). Dabei sind die in einer höheren Ebene liegenden Tastmittel 33 der oberen Steuerungsbahn 36 und die in der tieferen Ebene liegenden Tastmittel 33 der unteren Steuerungsbahn 35 zugeordnet. Die höher am Drehorgan 32 angeordneten Tastmittel 33 können dadurch abwechselnd an der höheren Steuerungsbahn entlanglaufen und die tieferliegend am Drehorgan 32 angeordneten Tastmittel 33 an der unteren Steuerungsbahn 35. Die Steuerungsbahnen 35 und 36 haben unterschiedliche Verläufe und/oder Profile mit jeweils aufeinanderfolgenden Abschnitten wechselnder Steigungen. Diese Steigungen sind so gewählt, dass sich immer nur ein Tastmittel 33 an der oberen Steuerungsbahn 36 oder unteren Steuerungsbahn 35 abwälzt. Durch die unterschiedlichen Steuerungsbahnen 35 und 36 wird ein harmonisches, zwängungsfreies und/oder gleichförmiges Drehen der Mitnehmerhaken 22 an jeder Leiste 34 erzeugt.

Zwischen mit Abstand aufeinanderfolgenden Leisten 34 werden die Mitnehmerhaken 22 von den Tastmitteln 33 ihrer Drehorgane 32 nicht verdreht.

Im mittleren Bereich der Steuerungsbahn 35, wo die Transportbügel 16 mit den daran hängenden textilen Gegenständen eine längsgerichtete Orientierung erhalten haben und diese beibehalten, erfolgt bei der hier gezeigten Vorrichtung das Auslesen der Datenträger des jeweiligen Transportbügels 16 und/oder des auf diesem hängenden textilen Gegenstands. Es ist aber auch denkbar, dass beim in eine längsgerichtete Position verdrehten textilen Gegenstand und/oder dem diesen tragenden Transportbügel 16 andere Maßnahmen erfolgen. Beispielsweise kann der am Transportbügel 16 hängende textile Gegenstand manuell oder durch zum beispielsweise Röntgen auf Fremdkörper untersucht werden.

Das Auslesen des jeweiligen Datenträgers erfolgt vorzugsweise während des kontinuierlich weiterhin mit insbesondere gleichbleibender Transportgeschwindigkeit angetriebenen Förderers 13 bei in Transportrichtung 17 ununterbrochen gleichbleibend weiterbewegtem Mitnehmerhaken 22 mit daran hängenden Transportbügeln 16 und textilen Gegenständen. Es ist aber auch denkbar, das Auslesen bei dazu gestopptem Förderer 13, also momentan stillstehenden Transportbügeln 16 und daran hängenden textilen Gegenständen, vorzunehmen.

In der Fig. 5 ist eine Feder 37 teilweise dargestellt. Dabei handelt es sich vorzugsweise um eine Torsionsfeder. Die Feder 37 umgibt einen Teil des um die Drehachse 31 drehbar im Lagergehäuse 28 gelagerten Mitnehmerhakens 22. Gegenüberliegende Enden der Feder 37 stützen sich einerseits am fest an der Förderkette 26 angeordneten Lagergehäuse 28 und andererseits am Drehorgan 32 und/oder dem jeweiligen Mitnehmerhaken 22 ab. Diese Enden bilden Federarme, von denen einer in der Fig. 5 dargestellt ist.

Die in vorstehend beschriebener Weise dem Mitnehmerhaken 22, insbesondere dem Lagergehäuse 28 desselben und dem Drehorgan 32, zugeordnete Feder 37 ist so ausgebildet, dass sie auf das Drehorgan 32 und den damit unverdrehbar verbundenen Mitnehmerhaken 22 eine Drehbewegung in dem Sinne ausübt, dass das mindestens eine sich momentan am dichtesten an der Steuerungsbahn 35 oder 36 befindende, vorzugsweise abstützende, Tastmittel 33 und/oder Stützlager gegen die Steuerungsbahn 35 der Leiste 34 gedrückt wird. Durch die Feder 37 wird jeweils ein Tastmittel 33 des Drehorgans 32 während des gesamten Weitertransports des Mitnehmerhakens 22 mit dem daran hängenden Transportbügel 16 samt textilem Gegenstand in Transportrichtung 17 durch die Vorrichtung permanent mit Vorspannung gegen die Steuerungsbahn 35 oder 36 gedrückt. Dadurch stützt sich das mindestens eine aufgrund der aktuellen Drehposition des Mitnehmerhakens 22 in Kontakt mit der Steuerungsbahn 35 oder 36 befindende Tastmittel 33 an der Steuerungsbahn 35 oder 36 der jeweiligen Leiste 34 ab. Die Tastmittel 33 folgen permanent dem Verlauf der Steuerungsbahn 35 und 36. Dort, wo die Steuerungsbahnen 35 und 36 durch kurvenförmige oder schräg zur Transportrichtung 17 verlaufende Abschnitte ihren Abstand zum jeweiligen Mitnehmerhaken 22 kontinuierlich ändert, folgen wechselnde Tastmittel 33 unter Verdrehung des Drehorgans 32 dem schrägen, kurvenförmigen Verlauf der Steuerungsbahn 35 oder 36 während des Weitertransports des Mitnehmerhakens 22 in Transportrichtung 17. Die permanente Abtastung der Steuerungsbahn 35 und 36 durch wechselnde Tastmittel 33 führt dazu, dass der jeweilige Mitnehmerhaken 22 durch das damit verbundene Drehorgan 32 gedreht wird, wodurch es auch zum Drehen des Transportbügels 16 mit dem daran hängenden textilen Gegenstand kommt.

Die nachfolgende Beschreibung bezieht sich auf die in den Fig. 6 bis 10 gezeigte zweite Vorrichtung zum Drehen von an Transportbügeln 16 hängenden nicht gezeigten textilen Gegenständen, insbesondere Bekleidungsstücken. Diese Vorrichtung ist so ausgebildet, dass sie die Transportbügel 16 mit den daran hängenden textilen Gegenständen um 180° dreht. Dabei werden die textilen Gegenstände mit den Transportbügeln 16 durch eine Halbkreisdrehung gewendet. Das Wenden erfolgt zu dem Zweck, dass alle quergerichtet zur Transportrichtung 17 entlang einer nicht gezeigten Förderstrecke mit den Transportbügeln 16 weitertransportierten textilen Gegenstände mit der Vorderseite, beispielsweise einer Knopfleiste, in die gleiche Richtung zeigen, beispielsweise in Transportrichtung 17 vorauseilen. Mit der Vorrichtung werden deswegen nur solche Transportbügel 16 mit daran hängenden Wäschestücken gewendet, bei denen die Vorderseiten nicht in die vorgesehene Richtung weisen, beispielsweise ihre Knopfleisten nicht in Transportrichtung 17 vorauseilen. Um das zu ermöglichen, ist vorzugsweise die Vorrichtung in einer Pypassstrecke zur Förderstrecke angeordnet, und zwar zwischen in den Fig. 6 bis 10 nur angedeuteten Schienen 21, auf denen die Bügelhaken 20 der Transportbügel 16 in Transportrichtung 17 entweder schwerkraftbedingt abwärtsgleiten oder von an einem nicht dargestellten Förderstrang angeordneten Mitnehmern auf der Schiene 21 entlangbewegt werden. Aus der Bypassstrecke, in der die Vorrichtung angeordnet ist, ist dann die Schiene 21 zur Anordnung der Vorrichtung abschnittsweise entfernt.

Die Vorrichtung verfügt über ein Gehäuse 38. Das Gehäuse 38 ist so ausgebildet, dass nur ein oberer Teil des Bügelhakens 20 des Transportbügels 16 durch einen Schlitz 39 im Boden 40 des Gehäuses 38 hindurchläuft. Der übrige Teil des Transportbügels 16, insbesondere seine Bügelarme 18 und der darauf hängende textile Gegenstand, befindet sich außerhalb des Gehäuses 38, und zwar hängend unter demselben (Fig. 6). Gegenüberliegende Stirnseiten 41 des Gehäuses 38 sind mindestens teilweise offen, wobei die offenen Stellen mit den Enden des Schlitzes 39 verbunden sind, so dass der sich im Gehäuse 38 der Vorrichtung befindende Teil des Bügelhakens 20 des jeweiligen Transportbügels 18 am Zulaufende 10 in das Gehäuse 38 und am Auslaufende 11 aus dem Gehäuse 38 auslaufen kann.

Unterhalb einer Decke 42 des Gehäuses 38 der Vorrichtung ist ein Förderer 14 derselben befestigt. Bei diesem Förderer handelt es sich nicht um einen umlaufend angetriebenen Stetigförderer wie bei der Vorrichtung der Fig. 1 bis 5, sondern um einen intermittierenden Förderer 14. Dieser Förderer ist abwechselnd zwischen dem Zulaufende 10 und dem Auslaufende 11 von einer Übergabestellung am Zulaufende 10 zu einer Abgabestelle am Auslaufende 11 in Transportrichtung 17 bewegbar und wieder in zur Transportrichtung 17 entgegengesetzte Richtung zurückbewegbar. Bei der Bewegung von der Übergabestellung in die Abgabestellung wird vom Förderer 14 der Transportbügel 16 mit dem Wäschestück in Transportrichtung 17 zum Auslaufende 11 transportiert. Die Zurückbewegung vom Auslaufende 11 zum Zulaufende 10 erfolgt bei leerem Förderer 14 ohne einen daran hängenden Transportbügel 16.

Der intermittierende Förderer 14 im Gehäuse 38 der Vorrichtung verfügt über eine ortsfeste geradlinig in Transportrichtung 17 verlaufende Führungsschiene 43, an der von einem Antrieb ein Schlitten 44 in und gegen die Transportrichtung 17 verfahrbar ist. Beim Antrieb handelt es sich um einen in den Fig. 6 bis 10 nicht gezeigten Linearantrieb, beispielsweise einen Pneumatikzylinder, einen Shuttlezylinder, einen Spindeltrieb, einen Zahnstangentrieb oder einen Riementrieb.

Am entlang der sich durch die gesamte Länge des Gehäuses 38 erstreckenden Führungsschiene 43 verfahrbaren Schlitten 44 ist ein einziger Mitnehmerhaken 23 befestigt. Diese Befestigung erfolgt mittels eines unverdrehbaren mit dem Schlitten 44 verbundenen Lagergehäuses 45. In diesem Lagergehäuse 45 ist der Mitnehmerhaken 23 um eine vorzugsweise vertikale Drehachse 46 frei drehbar gelagert. Am unteren Ende des Mitnehmerhakens 28 befindet sich ein hakenartiger Aufhänger 47. Der Bügelhaken 20 des Transportbügels 16, der so wie mit der ersten Vorrichtung beschrieben ausgebildet sei kann, ist auf den Aufhänger 47 des Mitnehmerhakens 28 aufhängbar, wodurch der Transportbügel 16 mit dem daran hängenden textilen Gegenstand sich am Mitnehmerhaken 23 anhängen lässt (Fig. 6). Dabei kreuzt der Bügelhaken den Aufhänger 47, wodurch der Transportbügel 16 - abgesehen von geringem Spiel - nicht oder nur gering gegenüber dem Mitnehmerhaken 23, insbesondere im Mitnehmerhaken 23, verdrehbar ist.

An einem den Aufhänger 47 am unteren Ende des Mitnehmerhakens 23 gegenüberliegenden oberen Ende des Mitnehmerhakens 23 ist ein Dreharm 48 unverdrehbar angeordnet. Vom Dreharm 48 ist der Mitnehmerhaken 23 um seine vertikale Drehachse 46 verdrehbar, wozu der Dreharm 48 in einer senkrecht zur Drehachse 46 verlaufenden und vorzugsweise horizontalen Ebene verdrehbar ist. Ein freies, äußeres Ende des Dreharms 48 weist ein Tastmittel 49 auf. Hierbei kann es sich um einen Tastvorsprung, wie zum Beispiel einen vorzugsweise hochstehenden, parallel zur Drehachse 46 verlaufenden Stift handeln, wobei gegebenenfalls auf dem Stift eine frei drehbare Rolle gelagert ist, die den Stift umgibt. Die Rolle 50 kann auf dem Stift des Tastmittels 49 gleit- oder kugelgelagert sein.

Vorzugsweise unter der Decke 42 des Gehäuses 38 ist neben der Führungsschiene 43 des Schlittens 44 eine Führung 51 für das Tastmittel 49 am freien Ende des Dreharms 48 des Mitnehmerhakens 23 angeordnet. Die Führung 51 weist eine Steuerungsbahn auf. In der Steuerungsbahn bewegt sich das Tastmittel 49 geführt von derselben entlang, wenn der Mitnehmerhaken 23 in und gegen die Transportrichtung 17 translatorisch verfahren wird.

Bei der in den Fig. 6 bis 10 gezeigten Vorrichtung ist die Steuerungskurve von einer Nut 52 gebildet, in die das Tastmittel 49, insbesondere die Rolle 50 desselben, formschlüssig eingreift und dadurch entsprechend dem Verlauf der Steuerungsbahn, insbesondere der Nut 52 derselben, das Tastmittel 49 den Dreharm 48 beim Verfahren des Mitnehmerhakens 23 in Transportrichtung 17 gezielt verschwenkt und dabei der Mitnehmerhaken 23 mit dem Transportbügel 16 und dem daran hängenden textilen Gegenstand zum Wenden desselben um 180° verdreht wird.

Die Steuerungsbahn, insbesondere die diese bildende Nut 52, verfügt zum Wenden des textilen Gegenstands und Verdrehen des Dreharms 48 mit dem daran befestigten Mitnehmerhaken 23 um 180° über einen besonders gestalteten Verlauf. Demnach weist die Steuerungsbahn, insbesondere die diese bildende Nut 52, einen solchen Verlauf oder ein solches Profil auf, dass der Mitnehmerhaken 23 bei seiner anfänglichen 90°-Drehung zunehmend schneller gedreht wird und bei der abschließenden 90°-Drehung zunehmend langsamer gedreht wird.

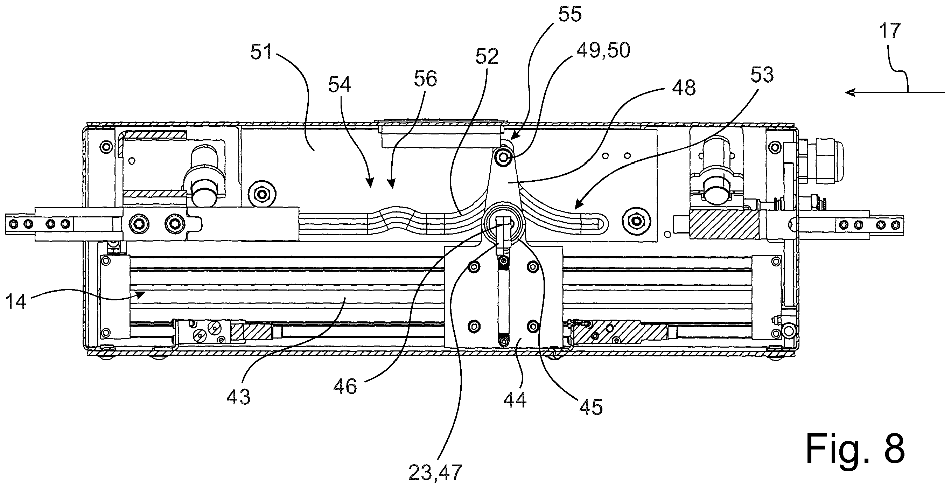

Die Nut weist 52 zwei zusammenhängende Nutabschnitte 53 und 54 auf. Beide Nutabschnitte 53 und 54 verfügen über einen bogenförmigen, insbesondere mindestens viertelkreisförmigen Verlauf mit vorzugsweise sich progressiv in Transportrichtung 17 ändernder Steigung. In Transportrichtung 17 gesehen folgen die beiden Nutabschnitte spiegelverkehrt aufeinander. Dabei treffen sich die Nutabschnitte 53 und 54 an einer höchsten Stelle 55 (Fig. 8). An der höchsten Stelle 55 sind beide spiegelbildlich zueinander angeordneten Nutabschnitte 53 und 54 miteinander verbunden, so dass sie hier nahtlos ineinander übergehen und hier einen oberen Umkehrpunkt der Steuerungsbahn und/oder Nut 52 bilden. Im anfänglichen Nutabschnitt eilt das Tastmittel 49 der Drehachse 46 vor. Im darauffolgenden, hinteren Nutabschnitt 54 ändert sich das. Dann befindet sich das Tastmittel 49 hinter der Drehachse 46.

Der hinter dem Zulaufende 10 beginnende anfängliche Nutabschnitt 53 verfügt über einen etwa viertelkreisförmigen Teil. Der in Transportrichtung 17 darauffolgende Nutabschnitt 54 ist im gezeigten Ausführungsbeispiel etwas länger. Dieser Nutabschnitt 54 verfügt nach einem ebenfalls viertelkreisförmigen Teil über einen längeren horizontalen Teil, der parallel zur Führungsschiene 43 verläuft. In diesem längeren geradlinigen Teil befindet sich ein Bogenteil 56. Es ist aber denkbar, dass der Nutabschnitt 54 ein solches Bogenteil 56 nicht aufweist und auch über einen kürzeren geradlinigen Teil am Ende des Nutabschnitts 54 verfügt.

Der in der Figur gezeigte längere endseitige Teil des Nutabschnitts 54 und/oder der Bogenteil 56 dienen dazu, nach dem Wenden des Transportbügels 16 Schwingungen und/oder Schaukelbewegungen des am Transportbügel 16 hängenden textilen Gegenstands zu dämpfen, also den textilen Gegenstand nach dem Wenden sozusagen zu beruhigen.

Das Tastmittel 49 am freien Ende des Dreharms 48 des Mitnehmerhakens 23 ist so ausgebildet, dass es mit geringem Spiel, aber zwängungsfrei durch die Steuerungsbahn, insbesondere Nut 52, hindurchläuft. Vorzugsweise geschieht das derart, dass sich die Rolle 50 des Tastmittels an gegenüberliegenden Rändern in der Nut 52 abstützt und/oder abwälzt und/oder formschlüssig in beiden Nutabschnitten 53 und 54 der Nut 52 geführt ist.

Das Wenden des Transportbügels 16 mit dem darunter hängenden textilen Gegenstand erfolgt bei der Vorrichtung der Fig. 6 bis 10 in zwei unmittelbar und stufenlos aufeinanderfolgenden Phasen von jeweils 90°. In der Fig. 8 ist eine Stellung des Schlittens 44 mit dem Mitnehmerhaken 23 zwischen den beiden Phasen gezeigt. Dann ist der Mitnehmerhaken 23 beim Entlangbewegen desselben vom Schlitten 44 auf der geradlinigen Führungsschiene 23 in Transportrichtung 17 um 90° verdreht, indem der Transportbügel mit dem textilen Gegenstand momentan längs zur Transportrichtung 17 ausgerichtet ist. Dabei befindet sich das Tastmittel, insbesondere die Rolle 50, am freien Ende des Dreharms 48 des Mitnehmerhakens 23 an der höchsten Stelle 55 der Nut 52, also am Übergang vom Nutabschnitt 53 zum Nutabschnitt 54.

Wenn sich der Schlitten 44 und der Mitnehmerhaken 23 in der Übergabestellung befinden, in der ein Transportbügel 16 mit daran hängendem textilen Gegenstand mit seinem Bügelhaken 20 auf den Aufhänger 29 des Mitnehmerhakens 23 aufgehängt wird, befindet sich der Schlitten 44 mit dem Mitnehmerhaken 23 im Bereich des Zulaufendes 10. Das ist das rechte Ende der Führungsschiene 43 bezogen auf die Darstellung der Fig. 8. Dann befindet sich der Dreharm 48 bezogen auf die Darstellung der Fig. 8 in einer etwa horizontalen Ausrichtung und die Rolle 50 am freien Ende des Dreharms 48 am zum Zulaufende 10 weisenden Ende des rechten Nutabschnitts 53. In dieser Stellung kann ein quer zur Transportrichtung 17 ausgerichteter Transportbügel 16 mit daran hängendem Wäschestück mit seinem Bügelhaken 20 auf den Aufhänger 29 des Mitnehmerhakens 23 gelangen.

Wird nun der Schlitten 44 zusammen mit dem Mitnehmerhaken 23 und dem daran unverdrehbar befestigten Dreharm 48 in Transportrichtung 17 linear neben der Steuerungsbahn, insbesondere der Nut 52, weiterbewegt, wird der Dreharm 48 bis zum Erreichen der höchsten Stelle der Nut 52 im Uhrzeigersinn (bezogen auf die Darstellung der Fig. 8) verschwenkt in eine vertikale Stellung.

Durch ununterbrochenes Weiterbewegen des Schlittens 44 mit dem Mitnehmerhaken 23 und dem daran hängenden Transportbügel 16 samt textilem Gegenstand in Transportrichtung 17 wird der Dreharm 48 um weitere 90° in wiederum eine horizontale Stellung verschwenkt. Auch dabei wird der Transportbügel 16 mit dem daran hängenden textilen Gegenstand nochmals um 90° im Uhrzeigersinn verdreht.

Insgesamt wird nach dem Durchfahren des Tastmittels 49 durch beide Nutabschnitte 53 und 54, also des Abfahrens der gesamten Nut 52, der Mitnehmerhaken 23 mit dem Transportbügel 16 und dem daran hängenden textilen Gegenstand um 180° gedreht, also gewendet, so dass nun eine andere Seite des textilen Gegenstands in Transportrichtung 17 vorauseilt.

### Bezugszeichenliste:

| | | | |
|---|---|---|---|
| 10 | Zulaufende | 36 | Steuerungsbahn |
| 11 | Auslaufende | 37 | Feder |
| 12 | Anfang | 38 | Gehäuse |
| 13 | Förderer | 39 | Schlitz |
| 14 | Förderer | 40 | Boden |
| 15 | Ende | 41 | Stirnseite |
| 16 | Transportbügel | 42 | Decke |
| 17 | Transportrichtung | 43 | Führungsschiene |
| 18 | Bügelarm | 44 | Schlitten |
| 19 | Klammer | 45 | Lagergehäuse |
| 20 | Bügelhaken | 46 | Drehachse |
| 21 | Schiene | 47 | Aufhänger |
| 22 | Mitnehmerhaken | 48 | Dreharm |
| 23 | Mitnehmerhaken | 49 | Tastmittel |
| 24 | Gehäuse | 50 | Rolle |
| 25 | Decke | 51 | Führung |
| 26 | Förderkette | 52 | Nut |
| 27 | Antrieb | 53 | Nutabschnitt |
| 28 | Lagergehäuse | 54 | Nutabschnitt |
| 29 | Aufhänger | 55 | Stelle |
| 30 | Führungsstrang | 56 | Bogenteil |
| 31 | Drehachse | | |
| 32 | Drehorgan | | |
| 33 | Tastmittel | | |
| 34 | Leiste | | |
| 35 | Steuerungsbahn | | |

## Patentansprüche

1. Vorrichtung zum Drehen von an Transportbügeln (16) hängenden textilen Gegenständen, insbesondere Bekleidungsstücken, mit einem umlaufenden Förderer (16), der wenigstens einen Mitnehmerhaken (22) zum Anhängen eines Bügelhakens (20) des jeweiligen Transportbügels (16) aufweist, einem umlaufend in Transportrichtung (17) antreibbaren, endlosen Förderstrang, an dem der wenigstens eine Mitnehmerhaken (22) angeordnet ist, und einem Führungsstrang (30), an oder in dem der Förderstrang in Transportrichtung (17) entlangbewegbar ist, **dadurch gekennzeichnet, dass** der wenigstens eine Mitnehmerhaken (22) drehbar am Förderstrang befestigt ist und jeweils ein zum Drehen des Mitnehmerhakens (22) dienendes Drehorgan (32) aufweist, das mit wenigstens einer ortsfesten Führung korrespondiert.

2. Vorrichtung nach Anspruch 1, **dadurch gekennzeichnet, dass** der jeweilige Mitnehmerhaken (22) um eine vorzugsweise vertikale Drehachse (31) frei drehbar in einem am Förderstrang befestigten Lagergehäuse (28) gelagert ist.

3. Vorrichtung nach Anspruch 1 oder 2, **dadurch gekennzeichnet, dass** das Drehorgan (32) einen scheibenartigen, vorzugsweise scheibensegmentartigen, Körper aufweist, der in einer die Drehachse (31) des Mitnehmerhakens (22) senkrecht schneidenden Ebene liegt und sich mindestens über einen Drehbereich des Transportbügels (16) von mindestens 90° erstreckt.

4. Vorrichtung nach einem der vorhergehenden Ansprüche, **dadurch gekennzeichnet, dass** dem scheibenartige Körper des Drehorgans (32) mehrere über den Drehbereich des Mitnehmerhakens (22) verteilte, sich an der Führung abstützende Kontakt- oder Tastmittel (33) zugeordnet sind und die wenigstens eine Führung mindestens eine Steuerungsbahn (35) aufweist, die von den oder abwechselnden Kontakt- oder Tastmitteln (33) abtastbar ist und/oder die Kontakt- oder Tastmittel (33) von am Rand des Drehorgans (32) verteilt angeordnete frei drehbare Tastmittel, vorzugsweise Stützkörper, beispielsweise gleit- oder wälzgelagerte Rollen, gebildet sind, deren äußere Mantelflächen zum Abwälzen an der mindestens einen Steuerungsbahn (35) der jeweiligen Führung ausgebildet sind.

5. Vorrichtung nach einem der vorhergehenden Ansprüche, **dadurch gekennzeichnet, dass** die wenigstens eine Führung und/oder die mindestens eine Steuerungsbahn (35) parallelverlaufend neben einem Abschnitt des den wenigstens einen Mitnehmerhaken (22) in Transportrichtung (17) antreibenden und/oder weiterbewegenden Förderstrangs ortsfest angeordnet ist.

6. Vorrichtung nach einem der vorhergehenden Ansprüche, **dadurch gekennzeichnet, dass** die mindestens eine Steuerungsbahn (35) entlang ihres Verlaufs in Transportrichtung (17) einen sich vorzugsweise stetig ändernden Abstand zum danebenliegenden Abschnitt des Förderstrangs aufweist, wobei an der mindestens einen Steuerungsbahn (35) sich mindestens ein Tastmittel (33), vorzugsweise der Stützkörper des scheibenartigen Körpers des Drehorgans (32) beim Vorbeilaufen des oder des jeweiligen Mitnehmerhakens (22) an der Steuerungsbahn (35) abstützt.

7. Vorrichtung nach einem der vorhergehenden Ansprüche, **dadurch gekennzeichnet, dass** der wenigstens eine Mitnehmerhaken (22) um seine Drehachse (31) drehend vorgespannt ist, vorzugsweise derart, dass die Vorspannung mindestens ein Tastmittel (33) und/oder mindestens einen Stützkörper gegen die ihnen insbesondere temporär zugeordnete jeweilige Führung und/oder Steuerungsbahn (35) drückt.

8. Vorrichtung zum Drehen, vorzugsweise Wenden, von an Transportbügeln (16) hängenden textilen Gegenständen, insbesondere Bekleidungsstücken, mit einem Mitnehmerhaken (23) zum Anhängen eines Bügelhakens (20) des jeweiligen Transportbügels (17) und eine den Mitnehmerhaken (23) tragenden Schlitten (44), der zwischen einer Übergabestellung eines Transportbügels (16) mit einem daran hängenden textilen Gegenstand und einer Abgabestellung des Transportbügels mit dem daran hängenden textilen Gegenstand hin- und herbewegbar ist, **dadurch gekennzeichnet, dass** der Mitnehmerhaken (23) drehend am Schlitten (44) befestigt ist, und bei der Bewegung von der Übergabe- in die Abgabestellung und umgekehrt durch mindestens eine Führung (51) eine gezielt geführte Drehung erfährt.

9. Vorrichtung nach Anspruch 8, **dadurch gekennzeichnet, dass** der Mitnehmerhaken (23) um eine vorzugsweise vertikale Drehachse (46) von mindestens einer Steuerungsbahn der Führung (51) um 180° verdrehbar ist, insbesondere in entgegengesetzte Richtungen um jeweils 180°.

10. Vorrichtung nach Anspruch 8 oder 9, **dadurch gekennzeichnet, dass** der Mitnehmerhaken (23) in einem am Schlitten (44) fest angeordneten Lagergehäuse (45) um seine vertikale Drehachse (46) frei drehbar gelagert ist.

11. Vorrichtung nach einem der Ansprüche 8 bis 10, **dadurch gekennzeichnet, dass** der Schlitten (44) an einer ortsfesten, vorzugsweise geradlinigen, Führungsschiene (43) zwischen der Übergabe- und der Abgabestellung geführt verfahrbar, vorzugsweise translatorisch hin- und herbewegbar, ist.

12. Vorrichtung nach einem der Ansprüche 8 bis 11, **dadurch gekennzeichnet, dass** der Antrieb des Schlittens (44) von einem Linearantrieb, vorzugsweise einem Pneumatikzylinder, einem Shuttlezylinder, einem Spindeltrieb, einem Zahnstangentrieb oder einem Riementrieb, gebildet ist.

13. Vorrichtung nach einem der Ansprüche 8 bis 12, **dadurch gekennzeichnet, dass** die mindestens eine Steuerungsbahn von einer Nut (52) in der vorzugsweise als Führungsplatte ausgebildeten Führung (51) gebildet ist und/oder die die Steuerungsbahn bildende Nut (52) zwei Nutabschnitte (53, 54) aufweist, die vorzugsweise gleichermaßen als 90°-Bögen ausgebildet und spiegelbildlich zueinander angeordnet sind, wobei die beiden spiegelbildlich angeordneten Nutabschnitte (53 54) sich mit ihren zueinander gerichteten Enden an einer höchsten Stellen (55) der Steuerungsbahn treffen, ineinander übergehen und/ oder verbunden sind.

14. Vorrichtung nach einem der Ansprüche 8 bis 13, **dadurch gekennzeichnet, dass** der Mitnehmerhaken (23) vorzugsweise an seinem freien oberen Ende einen Dreharm (48) zum Drehen des Mitnehmerhakens (23) um seine Drehachse (46) aufweist und/oder ein freies Endes des Dreharms (48) mit einem insbesondere hochstehenden Tastmittel (49) oder Tastvorsprung versehen ist, das oder der zum insbesondere formschlüssigen Eingriff in die Steuerungsbahn, vorzugsweise die Nut (52) derselben, ausgebildet ist und/ oder das Tastmittel (49) oder der Tastvorsprung als ein in die Nut (52) eingreifender Stift oder ein Lager, beispielsweise ein Wälz- oder Gleitlager, ausgebildet ist.
